# EUROPEAN PATENT SPECIFICATION

(11) **EP 0 435 101 B1**
(45) Date of publication and mention of the grant of the patent: **07.12.1994**
(21) Application number: 90124155.4
(22) Date of filing: 13.12.1990
(51) Int. Cl.: G02F 1/136, G02F 1/133, H04N 3/12

(54) **Matrix liquid crystal display device using thin film transistors**
Flüssigkristall-Anzeigevorrichtung in Matrixform mit Dünnschichttransistoren
Dispositif d'affichage matriciel à cristaux liquides utilisant des transistors à film mince

(30) Priority: 15.12.1989 JP 325037/89
(43) Date of publication of application: 03.07.1991
(73) Proprietor: SEIKO EPSON CORPORATION, Shinjuku-ku Tokyo-to (JP)
(72) Inventor: Matsueda, Yojiro, c/o Seiko Epson Corporation, Suwa-shi, Nagano-ken (JP)
(74) Representative: Hoffmann, Eckart, Dipl.-Ing.

(56) References cited:
- EP-A- 0 194 315
- EP-A- 0 341 003
- EP-A- 0 376 329
- GB-A- 2 050 668

## Description

The present invention relates to a liquid crystal display device using thin film transistors (TFTs).

An example of a liquid crystal display device using TFTs is described in "The Japan Display 89 Digest", on pages 418 through 421, Matsueda, et al and in GB-A-2 050 668. Fig. 2 is a circuit diagram showing an example of such a liquid crystal display device. X1 and X2 designate signal lines, Y1, Y2, Y3 and Y4 scanning lines. TFT devices 11, 12 and 13 are provided at the crossing points between the signal line X1 and the scanning lines Y1, Y2 and Y3. The TFTs 11, 12 and 13 are turned ON or OFF in accordance with the timing of selective pulses supplied to the scanning lines Y1, Y2 and Y3. An image signal supplied to the signal line X1 is written into liquid crystal capacitors 17, 18 and 19 and storage capacitors 14, 15 and 16 through TFTs 11, 12 and 13, respectively.

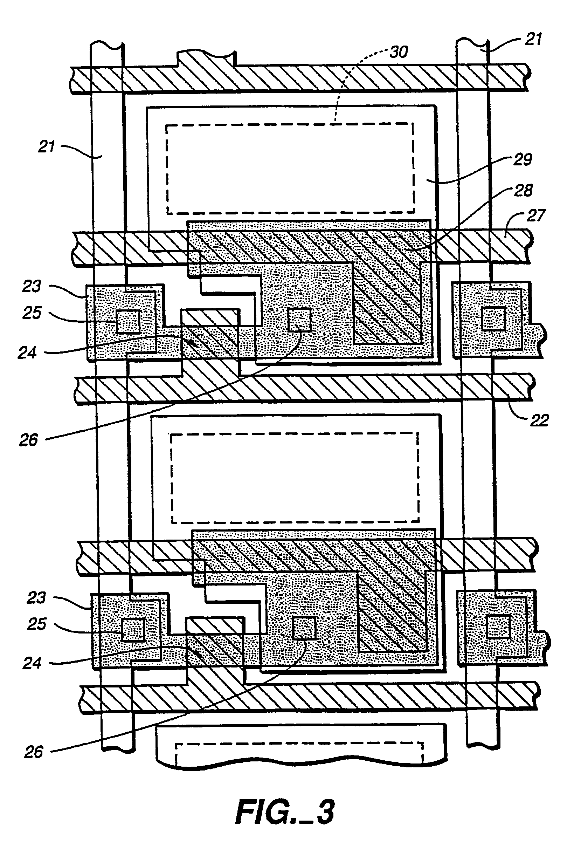

Fig. 3 is a plan view showing an example of a pixel portion of a conventional liquid crystal display device. A TFT 24 is arranged at the crossing point between a signal line 21 and a scanning line 22. A semiconductor thin film 23 forms the source, drain and channel of the TFT 24. Numeral 25 designates a contact hole for connecting the source of TFT 24 with the signal line 21, and numeral 26 designates a contact hole for connecting the drain of the TFT with a pixel electrode 29. A storage capacitor 28 is formed between the drain of TFT 24 and a common electrode 27. In the case of a transmission type display device, the portion of an aperture 30 becomes the effective pixel region for the image display.

The described conventional pixel structure gives rise to certain problems as described below.

The pixels must be arranged with a high density to obtain high quality images. However, the decrease of the pixel pitch causes a decrease in the capacitance of the liquid crystal capacitors. Therefore, it is necessary to provide sufficient storage capacitance to maintain a high image quality. Furthermore, in view of manufacture there is a limitation as to the miniaturizing of the size of the TFTs. Therefore, when the pixel pitch is decreased, the ratio of the region occupied with the storage capacitor and the TFT becomes larger while the ratio of the effective region for the image display, namely the aperture ratio, is decreased. The decrease of aperture ratio causes darkness on the display, further, it causes the problem that the image quality is remarkably decreased since the pattern of a light screen layer become noticeable as if the display is covered with a thick lattice.

A liquid crystal display device according to the prior art portion of claim 1 is disclosed in EP-A-0 376 329 (prior art under Article 54(3) EPC insofar as the same contracting States "DE", "FR" and "GB" are designated). In this prior art a common electrode is provided between each two adjacent scanning lines and each scanning line is shared by consecutive arrangements of pixel elctrodes.

The invention as claimed is intended to remedy the problem described above and its object is to provide a liquid crystal display device having a high aperture ratio, even though the pixel pitch is decreased.

This object is achieved with a liquid crystal display device as claimed.

The liquid crystal display device of the present invention has the common electrodes used for forming the storage capacitors at each pixel electrode and to connect the storage capacitors electrically with each other, each common electrode being formed between a pair of an odd/even number scanning line and the next even/odd number scanning line with no common electrode being provided between each pair of an even/odd number scanning line and the next odd/even number scanning line.

By this structure of the present invention the number of both, the common electrodes and the source electrode connecting portions of the TFTs can be reduced by half as compared with the conventional techniques for forming sufficient storage capacitance for each pixel. Therefore, a high aperture ratio can be maintained even though the pixel pitch is decreased.

Ways of carrying out the invention are described in detail below with reference to drawings which illustrate only specific embodiments, and in which
- Fig. 1: is a circuit diagram of a liquid crystal display device of the present invention,
- Fig. 2: is a circuit diagram of a conventional liquid crystal display device,
- Fig. 3: is a plan view showing a pixel portion of the conventional liquid crystal display device,
- Figs. 4, 6 and 8: are plan views showing pixel portions of liquid crystal display devices according to the present invention, and
- Figs. 5, 7 and 9: are cross-sectional views of liquid crystal display devices according to the present invention.

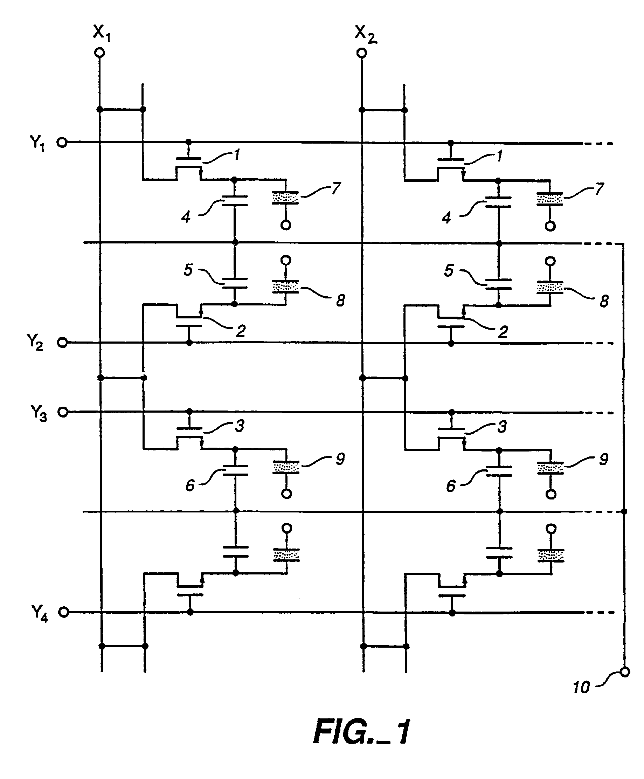

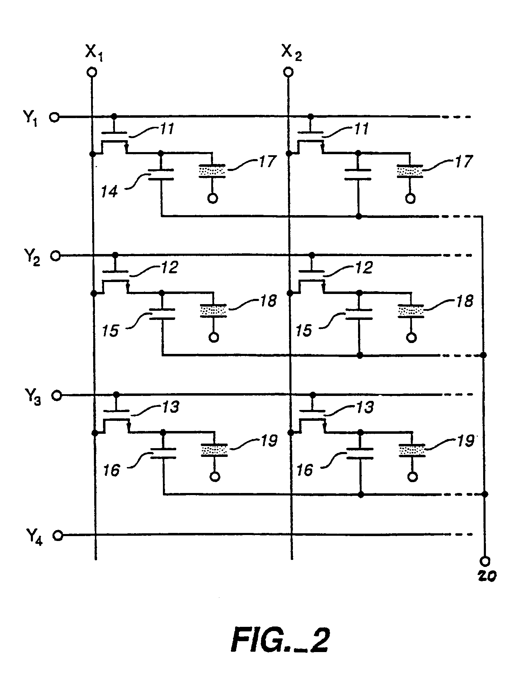

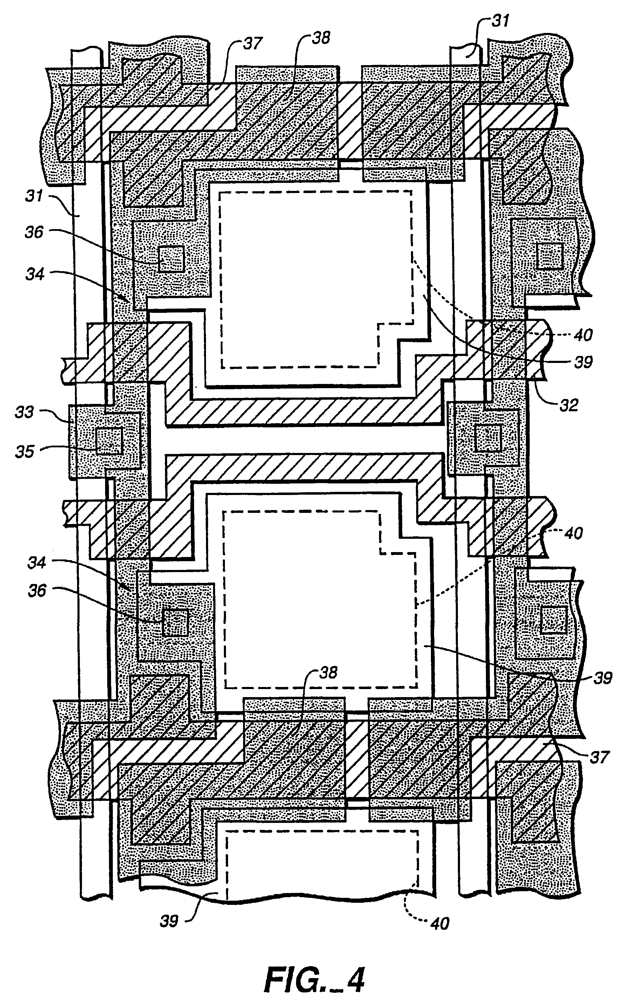

A first embodiment of the present invention will be described with reference to Figs. 1 and 4. Fig. 1 shows an example of a circuit diagram of a liquid crystal display device according to the present invention. X1 and X2 designate signal lines, and Y1, Y2, Y3 and Y4 designate scanning lines. TFTs 1, 2 and 3 are provided at the crossing points between the signal line X1 and the scanning lines Y1, Y2 and Y3. The TFTs 1, 2 and 3 are turned ON or OFF in accordance with the timing of selective pulses supplied to the scanning lines Y1, Y2 and Y3. The image signal supplied to the signal line X1 is written into liquid crystal capacitors 7, 8 and 9 and storage capacitors 4, 5 and 6 through the TFTs 1, 2 and 3. In the present invention, the common electrodes l0 used to form the storage capacitors and to connect the storage capacitors electrically are arranged in a ratio of one common electrode per two scanning lines. For example, since the storage capacitors 4 and 5 are formed by the same electrode wiring, sufficient capacitance can be provided on a narrower occupied area as compared with the conventional construction in which separate electrode wirings are used to form the common electrodes for capacitors 14 and 15 in Fig. 2. Further, since a pair of TFTs for upper and lower pixels are arranged in parallel, one connection portion to the signal line can be used in common for the pair of sources of the TFTs. For example, the connecting point between the TFTs 2 and 3 and the signal line X1 can be a single connection. Therefore, the occupied area of the TFTs can be reduced.

In Fig. 1, the common electrode 10 is arranged between each odd number scanning line and the following even number scanning line. It is also possible to arrange a common electrode 10 between each even number scanning line and the following odd number scanning line by shifting the arrangement.

Fig. 4 is a plan view showing an example of a pixel portion of the liquid crystal display device of Fig. 1. A TFT 34 is arranged at the crossing point between a signal line 31 and a scanning line 32. A semiconductor thin film 33 forms the source, drain and channel of TFT 34. Numeral 35 designates a contact hole for commonly connecting the source of a pair of TFTs for upper and lower pixels with the signal line 31. Numeral 36 designates a contact hole for connecting the drain of TFT 34 with a pixel electrode 39. A storage capacitor 38 is formed between the drain of TFT 34 and a common electrode 37. The common electrode 37 is used for the storage capacitors of a pair of pixels positioned on opposite sides of the common electrode. In the case of a transmission type display device, the portion indicated in aperture 40 becomes an effective region for image display. Since those regions other than the aperture 40 adversely affect the image quality, they are covered with a light shield to avoid the permeation of light.

In the present example, since the common electrode 37 is arranged in the region between the pixel electrodes which is not necessary for the image display, a high aperture ratio can be obtained. The area of the aperture 40 in Fig. 4 is larger than that of the aperture 30 in Fig. 3 by about 30%. Hence, the image plane can be brighter by 30% as compared with a similar element with a similar pixel pitch. Further, since the form of the aperture is changed from rectangular to approximately square, the lattice-like structure of the light shield layer becomes less apparent, remarkably improving the image quality. Further, if a slanted wiring pattern is used, it is possible to make the aperture ideally circular.

Another advantage of the present invention resides in the degree of freedom of the driving method. As is well known, NTSC and HDTV signals are provided with two interlaced fields. For displaying these fields in a liquid crystal display device, a driving method is often used in which two adjacent scanning lines are formed as a pair to be selected by the same timing to be written with the same data, and the pairs are changed every field. By this method, complicated peripheral apparatus, such as a memory, is not required and the response of the display to moving images is improved. Therefore, this is a practical method for avoiding flicker. However, in the structure of the conventional liquid crystal display device as shown in Fig. 3, since the pixel electrodes are adjacent to the scanning line of a neighboring row of pixels, an offset voltage caused by the capacitive coupling between the pixel electrode and the scanning electrode becomes different in two successive scanning lines. This gives rise to the problem that the brightnesses of successive scanning lines on the image plane vary. In a liquid crystal display device of the present invention, such as that shown in Fig. 4, since the pixel electrode is not adjacent to a scanning line of a different row of pixels, such problem is not caused and a uniform image plane can be obtained even if such a driving method as mentioned above is used. It is possible to carry out the usual serial scanning, and the driving system can be changed in accordance with the target.

In color display devices where two lines are scanned simultaneously, it is necessary to arrange the three color phosphors R (red), G (green) and B (blue) as vertical stripes. Where the normal driving method of serial scanning is employed, the color phosphor arrangement may be of the mosaic or triangular type.

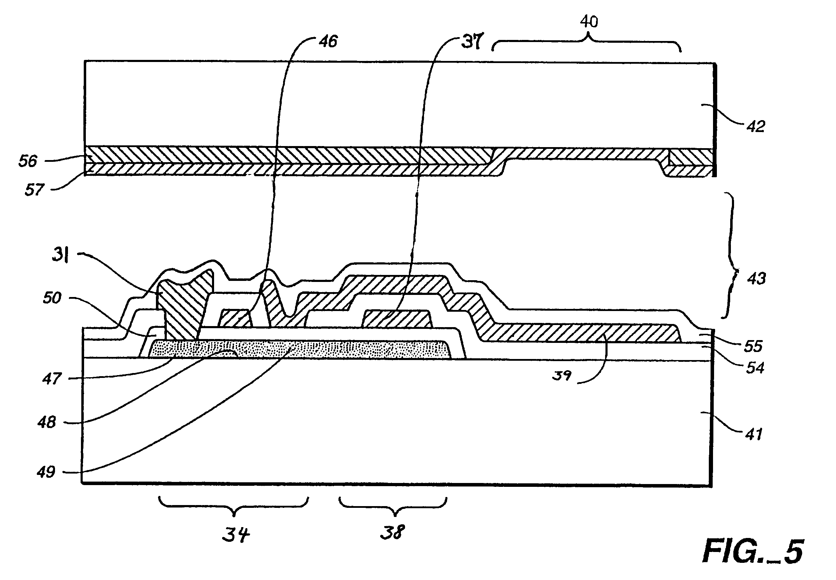

Fig. 5 is a cross-sectional view of an example of a liquid crystal display device corresponding to Fig. 4 and Fig. 3. In general, the liquid crystal display device using TFTs has two insulative substrates, i.e. the liquid crystal 43 is interposed between a TFT substrate 41 and a counter substrate 42. On the TFT substrate 41 the TFTs 34 and the storage capacitors 38 are arranged. The structure as shown in this Figure is of the coplanar type, in which the source 47 of the TFT, the drain 49 and the channel 48 are formed in the same semiconductor film. Since impurities are doped into the source 47 and the drain 49 from a gate insulative film 50 using the gate electrode 46 as a mask, the TFTs are of the self-alignment type. The storage capacitor 38 is formed as a MOS capacitor between the common electrode 37 and the drain 49, the common electrode 37 being formed of the same film as the gate electrode 46 of the TFT 34. There are two methods for forming a MOS capacitor. One method is to dope the semiconductor film with impurities before forming the gate electrode 46 and the common electrode 37. In this case, the electric potential of the common electrode 37 can be selected freely. In the second method, no special doping with impurities is performed. In this case, since the semiconductor thin film under the common electrode 37 becomes similar to the channel 48, a bias allowing formation of a reversed layer on the channel must be supplied to the common electrode 37 to use the MOS capacitance. The signal line 31 and the pixel electrode 39 are respectively connected to the source 47 and the drain 49 of the TFT 34 through contact holes. In the structure shown in Fig. 5, an additional storage capacitor is formed between the pixel electrode 39 and the common electrode 37 through an interlayer insulating film 54. In general, a layer of high precision and little defects, such as a thermal oxide film, is used for the gate insulating film, and it is formed rather thin to obtain excellent electric characteristics of the TFT. Therefore, the MOS capacitor mentioned above can have several times the capacitance of the capacitor formed between the common electrode 37 and the pixel electrode 39. In this Figure, if the drain 49 of the TFT and the contact hole of the pixel electrode 39 are arranged on the right side of the common electrode 37, only the MOS capacitor provides the function of the storage capacitor 38.

A passivation film 55 protects the thin film element and blocks a direct current flow through the liquid crystal. A light shield layer 56 provided on the counter substrate 42 controls a light leakage electric current of the TFT and results in high quality images having a large contrast ratio by covering non-effective portions of the image display. The aperture 40 is the effective region for the image display. The counter electrode 57 is made of a transparent electrically conductive film and covers all the surfaces contacting the liquid crystal. The liquid crystal 43 is driven by the electric field formed between the pixel electrode 39 and the counter electrode 57. When it is used as a transmission type display device, the pixel electrode 39 is formed by a transparent electrically conductive film, and if it is used as a reflection type-display device, the pixel electrode 39 is formed by a metallic thin film.

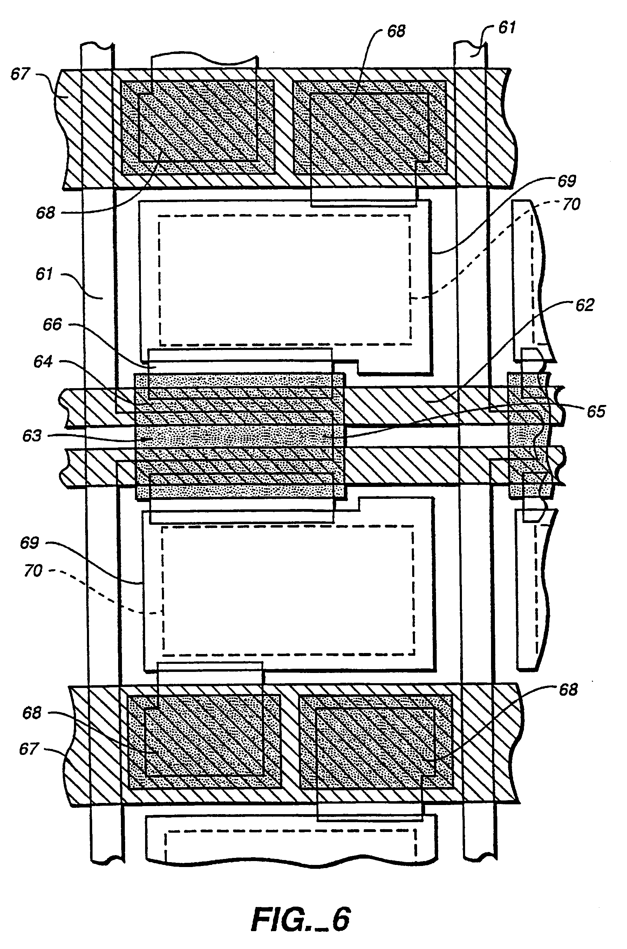

Fig. 6 shows a plan view of a pixel portion according to a second embodiment of the invention. The TFT is arranged at a crossing point between the signal line 61 and the scanning line 62. In this embodiment, the source 65 and the drain 66 of the TFT are formed in a semiconductor thin film layer different from that (63) of the channel 64. The common electrode 67 is used for the storage capacitors 68 of the pixels positioned on both sides of this common electrode. The pixel electrode 69 is connected with both, the drain 66 of the TFT and the storage capacitor 68. In the case of a transmission type display device, the region of the aperture 70 is the effective region for the image display. Since the region excepting the aperture 70 can degrade the image, they are covered with a light shield layer for preventing the permeation of light.

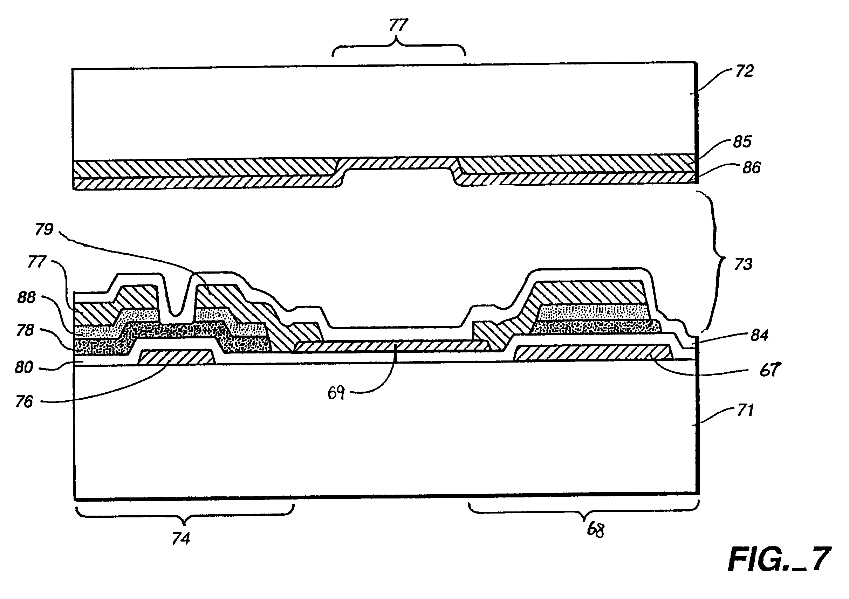

Fig. 7 is an example of a cross-sectional view of the liquid crystal display device corresponding to Fig. 6. The liquid crystal display device of this embodiment is also provided with a liquid crystal 73 between a pair of insulative substrates, namely between the TFT substrate 71 and the counter substrate 72. On the TFT substrate 71 are arranged the elements comprising the TFT 74 and the storage capacitor 68. The TFT shown in this Figure is of the "reverse stagger" type, having a gate electrode 76, a gate insulation film 80, a semiconductor thin film 78 forming the channel and an impurity containing semiconductor thin film 88, which are superposed one upon the other. A source electrode 77 and a drain electrode 79 are formed on the impurity containing semiconductor thin film 88. The source electrode 77 is formed by diverging from the signal line and the drain electrode is connected to the pixel electrode 69. It should be noted that instead of the "reverse stagger" type TFT a "stagger" type could be used which corresponds to the reverse stagger type shown in Fig. 7 turned upside down, i.e. with the order of layers being just contrary to that shown in Fig. 7. The storage capacitor 68 has a similar structure to that of the drain of the TFT, being arranged on the common electrode 67 and connected to the pixel electrode 69. The passivation layer 84 protects the thin film element and cuts the direct current applied to the liquid crystal. The light shield layer 85 arranged on the counter substrate 72 controls the light leakage electric current of the TFT and results in high quality images having a large contrast ratio by covering non-effective portions of the image display. The aperture 70 is the effective region for the image display. The counter electrode 86 made of a transparent electrically conductive film covers all surfaces contacting the liquid crystal, and the liquid crystal 73 is driven by the electric field between the pixel electrode 69 and the counter electrode 86.

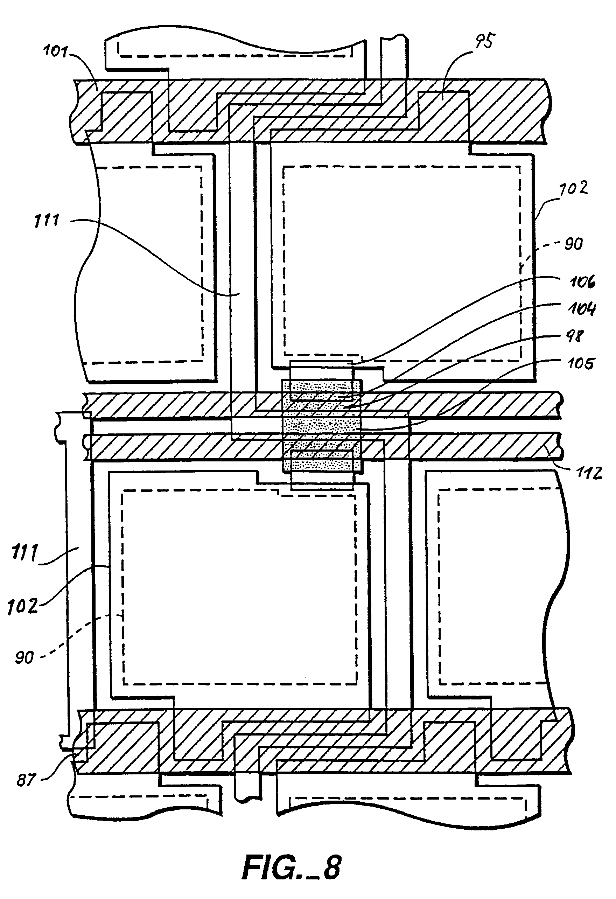

Fig. 8 is a plan view showing another embodiment of a pixel portion in a liquid crystal display device according to the invention. The pixel arrangement as shown herein is of the so-called triangular type often used in the video field because the pixel pattern is hardly perceivable. The TFT is arranged at a crossing point between signal line 111 and scanning line 112. The signal line 111 has a square wave or meander-like pattern as shown in Fig. 8. As in Fig. 6, the source 105 and the drain 106 of the TFT are formed from a thin film layer different from that (98) of the channel 104. In this embodiment, the signal line 111 overlies the source 105. The common electrode 101 overlies a partial portion of a pair of pixel electrodes 102 adjacent thereto. Numeral 90 is the aperture which is the effective area for the image display, 95 the storage capacitor.

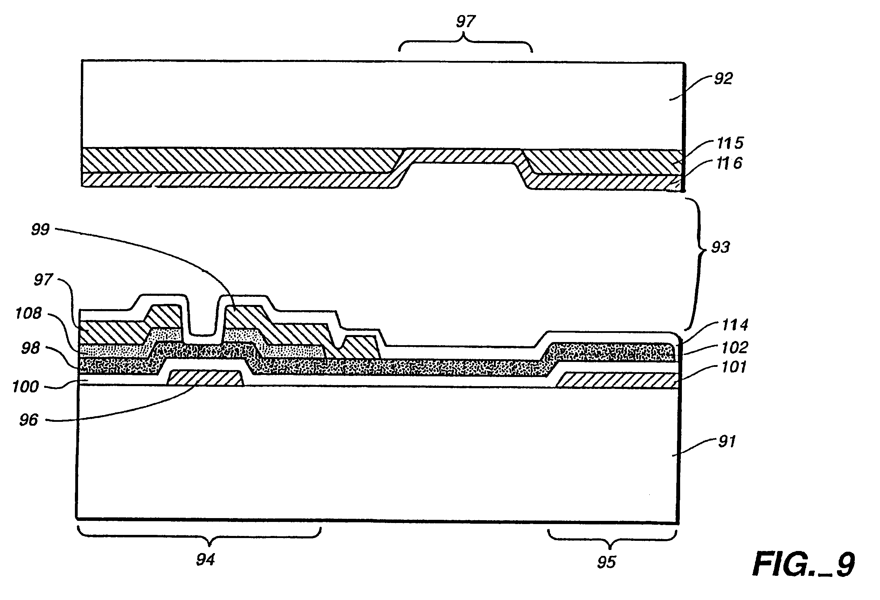

Fig. 9 represents a cross-sectional view of a liquid crystal display device corresponding to Fig. 8. The liquid crystal display device of this embodiment is also provided with a liquid crystal 93 between a pair of insulative substrates, namely between the TFT substrate 91 and the counter substrate 92. On the TFT substrate 91 are arranged the elements comprising TFTs 94 and a storage capacitors 95. The TFT as shown in this Figure is of the "reverse stagger" type, which is provided with a gate insulation film 100 on a gate electrode 96, a semiconductor thin film 98 forming the channel and the impurity containing semiconductor thin film 108 which are superposed serially. A source electrode 97 and a drain electrode 99 are formed on the impurity containing semiconductor thin film 108, the source electrode 97 being a part of the signal line and the drain electrode 99 being connected to the pixel electrode 102. In this embodiment, the storage capacitor (95) is formed by superposing the pixel electrode 102 over the common electrode 101 through the gate insulation film 100. Numeral 114 designates the passivation film. Numeral 115 designates the light shield layer, and numeral 116 designates the counter electrode formed by a transparent electrically conductive film.

## Claims

1. Un dispositif de visualisation à cristal liquide comprenant :
un premier substrat isolant (41, 91) portant un ensemble de lignes de signal (31, 61, 111), un ensemble de lignes de balayage (32, 62, 112) qui croisent les lignes de signal, un ensemble de transistors à couches minces (34, 64, 104) disposes aux points d'intersection des lignes de signal et des lignes de balayage, un ensemble d'électrodes de pixels (39, 69, 102) connectées respectivement aux transistors à couches minces, et un ensemble de condensateurs de mémorisation (38, 68, 95) associés respectivement aux electrodes de pixels, les condensateurs de mémorisation associés aux électrodes de pixels étant connectés à chaque ligne de balayage qui est formée et étant connectés en commun au moyen d'une electrode commune (37, 67, 101) qui s'étend entre deux lignes de balayage ;
un second substrat isolant (42, 72, 92) portant une contre-électrode (57, 86, 116) ; et
un cristal liquide (43, 73, 93) disposé dans l'espace qui est formé entre les premier et second substrats isolants ;
caractérisé en ce qu'entre chaque ligne de balayage ayant un numéro impair/pair et la ligne de balayage ayant le numéro pair/impair suivant, sont placées deux structures d'électrodes de pixels, adjacentes dans la direction des lignes de signal, l'une étant connectée à la ligne de balayage ayant le numéro impair/pair, et l'autre étant connectée à la ligne de balayage ayant le numéro pair/impair suivant, et une électrode commune est disposée pour former et connecter en commun les condensateurs de mémorisation qui sont associés aux deux structures d'électrodes de pixels, et
en ce que
chaque ligne de balayage ayant un numéro pair/impair et la ligne de balayage ayant le numéro impair/pair suivant sont placées de façon mutuellement adjacente, sans qu'une électrode commune ne soit placée entre elles.

2. Le dispositif de visualisation à cristal liquide suivant la revendication 1, dans lequel il existe un point de connexion commun (35) entre une ligne de signal respective (31) et les sources d'une paire des transistors à couches minces (34, 64, 104) associés à une ligne de balayage de numéro pair/impair (32) et la ligne de balayage de numéro impair/pair suivante, respectivement.

3. Le dispositif de visualisation à cristal liquide suivant la revendication 1 ou 2, dans lequel l'électrode commune (101) est disposée de façon à couvrir au moins une partie des electrodes de pixels (102) qui sont associées à une ligne de balayage de numéro impair/pair (112), et de celles qui sont associées à la ligne de balayage de numéro pair/suivant suivante.

4. Le dispositif de visualisation à cristal liquide selon l'une quelconque des revendications 1 à 3, utilises en combinaison avec un procédé d'attaque dans lequel la visualisation est effectuée avec deux trames des signaux entrelacées, de façon qu'une paire de lignes de balayage adjacentes soient sélectionnées simultanément et fassent l'objet d'une operation d'écriture avec le même signal, le signal qui est écrit dans cette paire de lignes de balayage dans une trame de numéro impair étant different de celui qui est écrit dans une trame de numéro pair.

## Revendications

1. A liquid crystal display device comprising:
a first insulating substrate (41, 91) having thereon a plurality of signal lines (31, 61, 111), a plurality of scanning lines (32, 62, 112) crossing said signal lines, a plurality of thin film transistors (34, 64, 104) provided at the crossing points of the signal lines and the scanning lines, a plurality of pixel electrodes (39, 69, 102) connected to said thin film transistors respectively, and a plurality of storage capacitors (38, 68, 95) associated with the pixel electrodes respectively, the storage capacitors associated with the pixel electrodes connected to each scanning line being formed and connected in common by means of a common electrode (37, 67, 101) extending between two scanning lines ;
a second insulating substrate (42, 72, 92) having thereon a counter electrode (57, 86, 116); and
a liquid crystal (43, 73, 93) disposed in the space formed between said first and second insulating substrates; characterized in that between each scanning line having an odd/even number and the scanning line having the following even/odd number, two arrangements of pixel electrodes, adjacent in the direction of said signal lines, are placed, one being connected to the scanning line having the odd/even number, the other one being connected to the scanning line having the following even/odd number, and one common electrode is arranged for forming and connecting in common the storage capacitors associated to both arrangements of pixel electrodes, and
in that
each scanning line having an even/odd number and the scanning line having the following odd/even number are placed adjacent to each other without a common electrode being placed therebetween.

2. The liquid crystal display device according to claim 1, wherein a common connecting point (35) between a respective signal line (31) and the sources of a pair of said thin film transistors (34, 64, 104) associated with an even/odd number scanning line (32) and the following odd/even number scanning line, respectively, is provided.

3. The liquid crystal display device according to claim 1 or 2, wherein said common electrode (101) is arranged to cover at least one portion of said pixel electrodes (102) associated with an odd/even number scanning line (112) and those associated with the next even/odd number scanning line.

4. The liquid crystal display device according to any of claims 1 to 3 used in combination with a driving method in which the display is provided with two interlaced signal fields, so that a pair of adjacent scanning lines is simultaneously selected and written with the same signal, the signal written in said pair of scanning lines in an odd number field being different from that in an even number field.

## Patentansprüche

1. Flüssigkristallanzeigevorrichtung, umfassend:
ein erstes isolierendes Substrat (41, 91), auf dem sich eine Vielzahl von Signalleitungen (31, 61, 111), eine Vielzahl von die Signalleitungen kreuzenden Abtastleitungen (32, 62, 112), eine Vielzahl von Dünnfilmtransistoren (34, 64, 104), die an den Kreuzungspunkten zwischen den Signalleitungen und den Abtastleitungen vorgesehen sind, eine Vielzahl von Pixelelektroden (39, 69, 102), die jeweils mit den Dünnfilmtransistoren verbunden sind, und eine Vielzahl von Speicherkondensatoren (38, 68, 95) befinden, die den Pixelelektroden jeweils zugeordnet sind, wobei die den Pixelelektroden zugeordneten und mit einer jeweiligen Abtastleitung verbundenen Speicherkondensatoren von einer gemeinsamen Elektrode (37, 67, 101), die sich zwischen zwei Abtastleitungen erstreckt, gebildet und zusammengeschaltet werden;
ein zweites isolierendes Substrat (42, 72, 92), auf dem sich eine Elektrode (57, 86, 116) befindet; und
einen Flüssigkristall (43, 73, 93), der in dem zwischen dem ersten und dem zweiten isolierenden Substrat gebildeten Raum angeordnet ist;
dadurch gekennzeichnet, daß zwischen jeder Abtastleitung einer ungeradzahligen/geradzahligen Nummer und der Abtastleitung der folgenden geradzahligen/ungeradzahligen Nummer zwei Anordnungen von Pixelelektroden, in der Richtung der Signalleitungen benachbart, plaziert sind, von denen eine mit der Abtastleitung der ungeradzahligen/geradzahligen Nummer verbunden ist, während die andere mit der Abtastleitung der folgenden geradzahligen/ungeradzahligen Nummer verbunden ist, wobei eine gemeinsame Elektrode zur Bildung und zum Zusammenschalten der den beiden Anordnungen von Pixelelektroden zugeordneten Speicherkondensatoren angeordnet ist, und
dadurch, daß jede Abtastleitung mit einer geradzahligen/ungeradzahligen Nummer und die Abtastleitung mit der folgenden ungeradzahligen/geradzahligen Nummer nebeneinander angeordnet sind, ohne daß eine gemeinsame Elektrode dazwischen gesetzt ist.

2. Flüssigkristallanzeigevorrichtung nach Anspruch 1, bei der ein gemeinsamer Verbindungspunkt (35) zwischen einer jeweiligen Signalleitung (31) und den Sourcen eines Paares der Dünnfilmtransistoren (34, 64, 104), die einer geradzahligen/ungeradzahligen Abtastleitung (32) bzw. der folgenden ungeradzahligen/geradzahligen Abtastleitung zugeordnet sind, vorgesehen ist.

3. Flüssigkristallanzeigevorrichtung nach Anspruch 1 oder 2, bei der die gemeinsame Elektrode (101) so angeordnet ist, daß sie wenigstens einen Abschnitt der Pixelelektroden (102) bedeckt, welche einer ungeradzahligen/geradzahligen Abtastleitung (112) zugeordnet sind, und solchen, die der nächsten geradzahligen/ungeradzahligen Abtastleitung zugeordnet sind.

4. Flüssigkristallanzeigevorrichtung nach einem der Ansprüche 1 bis 3 verwendet in Verbindung mit einem Ansteuerungsverfahren, bei dem die Anzeige mit zwei Zeilensprungsignalhalbbildern versehen ist, so daß ein Paar benachbarter Abtastleitungen gleichzeitig ausgewählt wird und mit demselben Signal beschrieben wird, wobei das in das Paar Abtastleitungen in einem ungeradzahligen Halbbild geschriebene Signal verschieden von dem in einem geradzahligen Halbbild ist.
